# EUROPEAN PATENT APPLICATION

(11) **EP 2 375 272 A2**
(43) Date of publication of application: **12.10.2011**
(21) Application number: 11160172.0
(22) Date of filing: 29.03.2011
(51) Int. Cl.: G02B 7/02

(54) **Drive module and electronic device**

(30) Priority: 29.03.2010 JP 2010076358
(71) Applicant: Seiko Instruments Inc., Chiba-shi, Chiba (JP)
(72) Inventor: Nobe, Tetsuya, Chiba-shi, Chiba (JP); Uchibori, Takanobu, Chiba-shi, Chiba (JP); Kotanagi, Susumu, Chiba-shi, Chiba (JP)
(74) Representative: Turner, Matthew Lawrence

(57) **Abstract**

In order to restrain rising of a lens frame due to an ambient environmental temperature and occurrence of an inclination of the lens frame during transmission of no electricity to a shape memory alloy wire, proposed is a drive module including: a lens frame; a supporting member for storing the lens frame; leaf spring members for elastically holding the lens frame so that the lens frame would be movable with respect to the supporting member; a shape memory alloy wire for driving the lens frame toward one leaf spring member against restoring force of the leaf spring members by contraction due to generation of heat in turning on the electricity; and a bias spring member for urging the lens frame toward a base plate through a locking portion to make the lens frame come in contact with the base plate through the other leaf spring member, the drive module wherein the lens frame is provided with a pre-pressure portion for generating urging force for initially deforming one leaf spring member to urge the lens frame toward the base plate and for holding a balance with the bias spring member in the case of no electricity transmitted to the shape memory alloy wire to keep the contact condition of the lens frame.

## Description

The present invention relates to a drive module and an electronic device, particularly, a drive module and an electronic device, which are suitable for adjustment of a focal point by driving an optical system or a movable member or for a use as an actuator.

In the related art, in a compact electronic apparatus such as a cellular phone with camera function or the like, proposed have been various kinds of drive module using a leaf spring to hold a driven member such as an image pickup lens unit so as to be movable in a direction of an optical axis while using expansion and contraction of a shape memory alloy wire to move the driven member in order to drive the driven member to perform autofocus, zooming and such.

In a drive module disclosed in Patent Reference 1, for example, a lens frame (a driven member) inserted in a module frame (a supporting member) is held by means of two leaf springs so as to be movable in the optical axis direction while a substantially midsection of a shape memory alloy wire is provided so as to be caught on a locking portion of the lens frame. Supplying the shape memory alloy wire with electric power allows the shape memory alloy wire to be raised in temperature and contracted, so that the lens frame can be moved up and down.

In the case of using the shape memory alloy wire, however, the shape memory alloy wire is contracted to raise the lens frame when the ambient environmental temperature is over a transformation temperature of the shape memory alloy wire.

Accordingly, in order to restrain the movement, it is arranged that a coil-shaped bias spring having initial downward urging force contrary to a direction that the lens frame moves upward be provided other than the leaf spring for holding the lens frame so that the lens frame would not rise upward within a range of a temperature of use in the drive module disclosed in Patent Reference 1.

Moreover, known has been a drive module, which is designed so that a bias spring formed into the shape of a ring would be used instead of the coil-shaped bias spring to initially urge the lens frame downward so as to prevent the lens frame from rising upward (refer to Patent Reference 2).
Patent Reference 1: Brochure of International Patent Laid-Open No. 09/096207
Patent Reference 2: Brochure of International Patent Laid-Open No. 09/056822

The above-mentioned conventional drive module, however, still has the following problems.

First, difference between the direction of urging the lens frame by the bias spring and a direction of an operation of the shape memory alloy wire for the lens frame causes a moment, and thereby, an inclination of the lens frame. Therefore, provided is a bias spring so that the both directions would be accorded.

In the drive module described in Patent Reference 1, for example, a locking projection is formed in an upper surface of a locking portion on which the shape memory alloy wire is locked. The bias spring is put on the locking projection from the outside to urge the lens frame downward. This causes the bias spring to be positioned aside with respect to the center of the lens frame, practically.

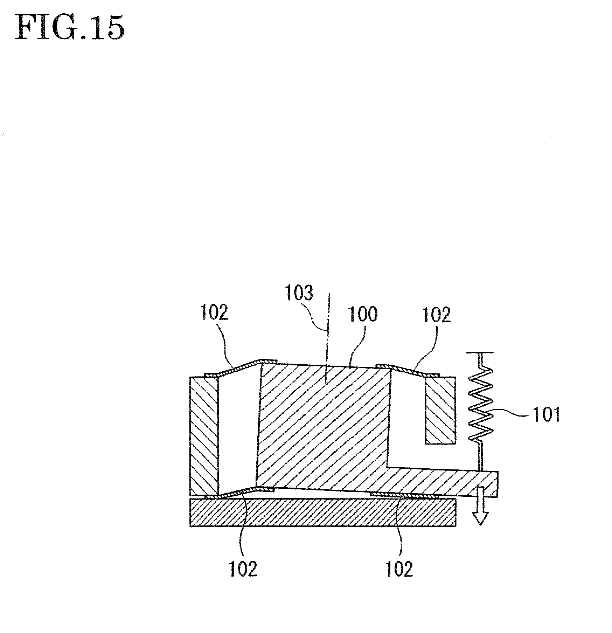

The bias spring constantly urges the lens frame to give downward force in order to keep down a rise of the lens frame. The urging force is set larger than force of the leaf spring. Accordingly, in the case of turning on no electricity, namely, in the case that no electricity is transmitted to the shape memory alloy wire, leaf springs 102 cannot hold a lens frame 100 since a bias spring 101 operates on the lens frame 100 dominantly more than the leaf spring 102, so that the lens frame 100 is easily inclined, as shown in Fig. 15. Therefore, an inclination of an optical axis 103 causes high possibility that a side of a pick-up image is out of focus and that a so-called one-side blur and the like occur. This results in difficulty of use as a camera in the case of no electricity turned on.

The operation force of the shape memory alloy wire is balanced with the urging force of the bias spring under the condition that the shape memory alloy wire is supplied with electric power to move the lens frame. Accordingly, the inclination of the lens frame is difficult to occur.

In view of the above, an object of the invention is to provide a drive module and an electronic device, which can restrain a rise of a lens frame, the rise being caused by an ambient environmental temperature, as well as restraining occurrence of an inclination of the lens frame in the case that no electricity is transmitted to the shape memory ally wire.

In order to solve the above problems, the invention provides the following device.
(1) A drive module in accordance with the invention includes: a lens frame; a supporting member for storing the lens frame therein; a pair of leaf spring members provided so as to hold the lens frame therebetween in an optical axis direction for elastically holding the lens frame so that the lens frame would be movable with respect to the supporting member along the optical axis direction; a shape memory alloy wire having both end parts held on the supporting member and a midsection locked on a locking portion of the lens frame for driving the lens frame toward one leaf spring member of the pair of leaf spring members against restoring force of the leaf spring members by contraction due to generation of heat in turning on the electricity; a base plate fixed to the supporting member so as to hold the other leaf spring member of the pair of leaf members between the base plate and the supporting member; and a bias spring member for urging the lens frame toward the base plate through the locking portion to make the lens frame come in contact with the base plate through the other leaf spring member, and in the drive module, the lens frame is provided with a pre-pressure portion for generating urging force for initially deforming one leaf spring member to urge the lens frame toward the base plate and for holding a balance with the bias spring member in the case of no electricity transmitted to the shape memory alloy wire to keep the contact condition of the lens frame.
   In the drive module according to the invention, the bias spring member urges the lens frame toward the base plate, and thereby, can make the lens frame come in contact with the base plate through the other leaf spring member in the case of no electricity transmitted to the shape memory alloy wire. This allows the lens frame to be pushed down to restrain a rise of the lens frame even when the shape memory alloy wire is contracted due to an ambient environmental temperature.
   In the case of transmitting electricity to generate heat of the shape memory alloy wire, the wire is contracted to the length corresponding to the temperature. This allows the lens frame to move relatively to the supporting member through the locking portion, so that the lens frame can be moved to a side of one leaf spring member along the optical axis direction. The pair of leaf spring members is deformed when the lens frame moves. This causes the elastic restoration force to operate on the lens frame. The lens frame then stops at a position where the elastic restoration force of the pair of leaf spring members is balanced with the tension of the shape memory alloy wire.
   Stopping the transmission of electricity to the shape memory alloy wire enables the wire to be extended. This allows the lens frame to be moved in a direction opposite to the above. The lens frame can be moved in two directions along the optical axis and can be stopped at a desired position by controlling the quantity of heat generation of the shape memory alloy wire, as described above.
   The urging force of the bias spring member operates on the lens frame through the locking portion during the movement of the lens frame. The point of action of the urging force of the bias spring member is superimposed on the point of action of the operational force of the shape memory alloy wire at the locking portion. The two points of action are located in a straight line parallel to the optical axis. Accordingly, the moment of force for the lens frame is difficult to be generated and an inclination of the lens frame is difficult to occur during the movement.
   Further, the bias spring member urges the lens frame toward the base plate when no electricity is transmitted to the shape memory alloy wire, as described above. The occurrence of the inclination of the lens frame, however, can be restrained even in the case of transmission of no electricity.
   That is to say, it is possible to initially deform one leaf spring member to cause the one leaf spring member to generate the urging force for urging the lens frame toward the base plate since the lens frame is provided with the pre-pressure part. This allows a balance with the bias spring member urging the locking portion of the lens frame to be kept. Accordingly, the lens frame can be prevented from inclining to maintain a condition that the lens frame is in contact with the base plate.
(2) A drive module in accordance with the invention is the above-mentioned drive module in accordance with the invention wherein the pre-pressure part makes the lens frame thicker than the supporting member so that the lens frame would project from the toward the one leaf spring member during transmission of no electricity to the shape memory alloy wire.
   In the drive module in accordance with the invention, the pre-pressure part makes the lens frame thicker than the supporting member so that the lens frame would project from the supporting member toward the one leaf spring member during transmission of no electricity to the shape memory alloy wire. Accordingly, initially deforming the whole of one leaf spring member urges the lens frame toward the base plate certainly.
   Especially, an inclination of the lens frame can be restrained in transmission of no electricity with a simple structure such that a balance of thickness between the lens frame and the supporting member is only adjusted.
(3) A drive module in accordance with the invention is the above-mentioned drive module in accordance with the invention wherein the pre-pressure part is provided so as to be on an opposite side of the bias spring member across an axis of the lens frame.
   In the drive module in accordance with the invention, the pre-pressure portion is provided not all over the lens frame but partially so as to be positioned on an opposite side (on the diagonal) of the bias spring member across an axis of the lens frame. This allows a balance with the urging force of the bias spring member to be efficiently kept, so that initial deformation of one leaf spring member can be made small. Accordingly, even small urging force for urging the lens frame toward the base plate can effectively restrain an inclination of the lens frame.
(4) A drive module in accordance with the invention is the above-mentioned drive module in accordance with the invention wherein a spring constant of the one leaf spring member is larger than a spring constant of the other leaf spring member.
   In the drive module in accordance with the invention, a spring constant of one of the leaf spring member is larger than a spring constant of the other leaf spring member. Therefore, the urging force for urging the lens frame toward the base plate can be increased to restrain an inclination of the lens frame even in the case that the initial deformation of one leaf spring member by means of the pre-pressure portion is decreased as much as possible. This allows miniaturization and compaction of the drive module to be achieved.
(5) An electronic device in accordance with the invention includes the drive module in accordance with the invention.
   The electronic device in accordance with the invention includes the drive module in which a rise of the lens frame due to an ambient environmental temperature can be restrained and an inclination of the lens frame can be restrained when no electricity is transmitted to the shape memory alloy wire. Accordingly, the electronic device can be used as a fixed focus camera, for example, even under a condition that no electricity is transmitted. This can improve the worth as a product as well as achieving lowering of consumption power.
   In accordance with the drive module according to the invention, a rise of the lens frame due to an ambient environmental temperature can be restrained while occurrence of an inclination of the lens frame during transmission of no electricity to a shape memory alloy wire can be restrained.
   Furthermore, in accordance with the electronic device according to the invention, the drive module is provided. Accordingly, the electronic device can be used as a fixed focus camera, for example, even under a condition that no electricity is transmitted. This can improve the worth as a product as well as achieving lowering of consumption power.

Embodiments of the invention will now be described by way of example only with reference to the accompanying drawings, wherein like numbers reference like elements, and wherein:
Fig. 1 is a perspective view of a drive module in accordance with an embodiment of the invention, showing an external appearance of the drive module;
Fig. 2 is an exploded perspective view of the drive module shown in Fig. 1;
Fig. 3 is an exploded perspective view of a drive unit forming the drive module shown in Fig. 2, showing a structure of the drive unit;
Fig. 4 is a perspective view of the drive unit forming the drive module shown in Fig. 2, showing an external appearance of the drive unit;
Fig. 5 is a sectional view of the drive unit along a line A-A in Fig. 4;
Fig. 6 is a sectional view of the drive unit along a line B-B in Fig. 2;
Fig. 7 is a simplified sectional view of the drive unit shown in Fig. 4;
Fig. 8 is a perspective view of a drive unit in accordance with a modified embodiment, showing an external appearance of the drive unit;
Fig. 9 is a perspective view of a lens frame shown in Fig. 8;
Fig. 10 is a simplified sectional view of the drive unit along a line C-C in Fig. 8;
Fig. 11 is a plan view of a lower leaf spring in accordance with a modified embodiment;
Fig. 12 is a plan view of an upper leaf spring in accordance with a modified embodiment;
Fig. 13 is a plan view of an upper leaf spring in accordance with another modified embodiment;
Fig. 14A is a perspective view of a front surface of an electronic device in accordance with an embodiment of the invention, showing an external appearance of the front surface;
Fig. 14B is a perspective view of a back surface of an electronic device in accordance with an embodiment of the invention, showing an external appearance of the back surface;
Fig. 14C is a sectional view of an electronic device in accordance with an embodiment of the invention along a line D-D in Fig. 14B; and
Fig. 15 is a simplified sectional view of a conventional drive module, illustrating a disadvantage of the conventional drive module.

### (Drive module)

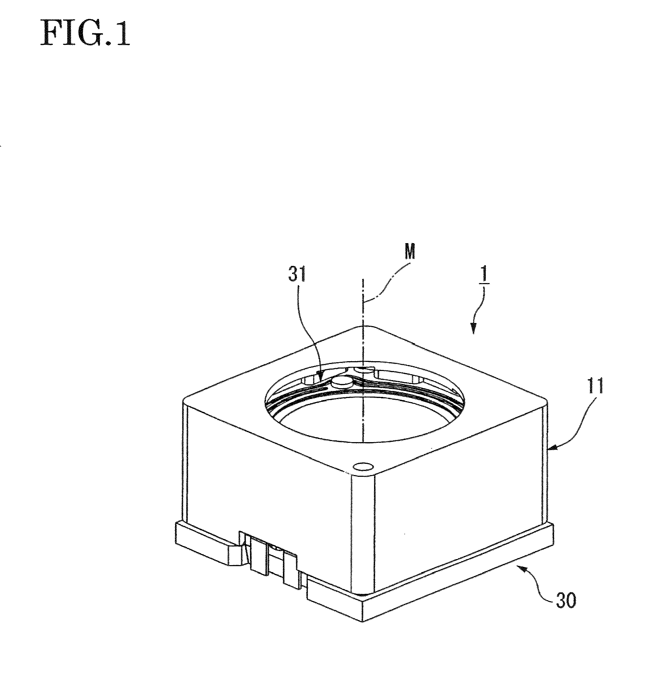

Now, described will be an embodiment of a drive module in accordance with the invention, with reference to Figs. 1 to 14.

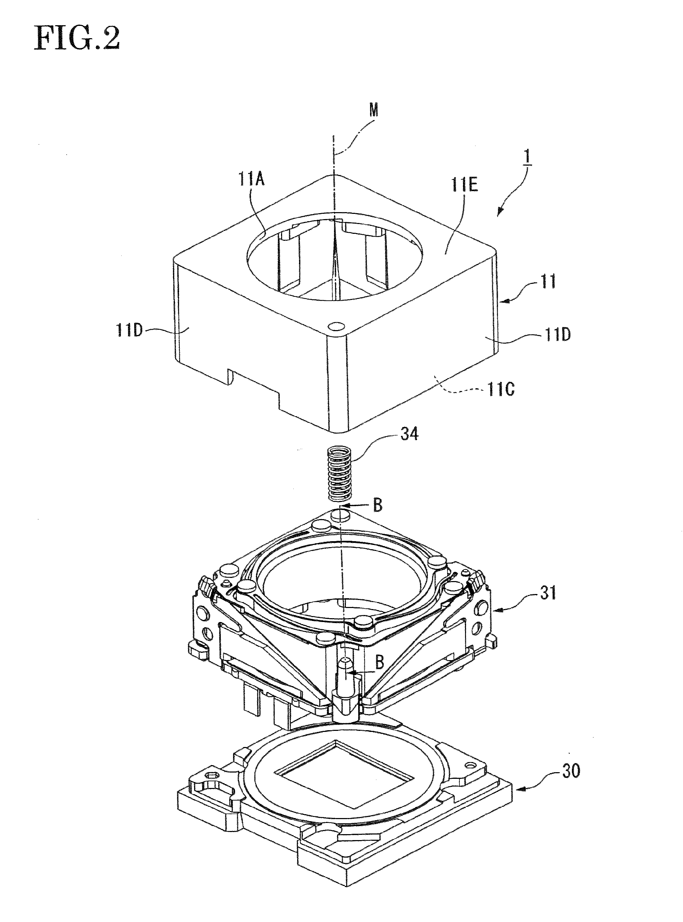

A drive module 1 in accordance with the embodiment is formed into the shape of a box as a whole, as shown in Figs. 1 and 2. Fig. 1 is a perspective view of the drive module 1, showing an appearance thereof. Fig. 2 is an exploded perspective view of a schematic structure of the drive module 1.

The drive module 1 is mounted to an electronic device or the like after completion of assembly. The drive module 1 is then fitted in or adhered to a substrate (not shown) for supplying the drive module 1 with a control signal and electric power to be fixed. The drive module 1 comprises an adaptor 30 located on the substrate, a drive unit 31 provided on the adaptor 30 and a cover 11 provided so as to cover the drive unit 31.

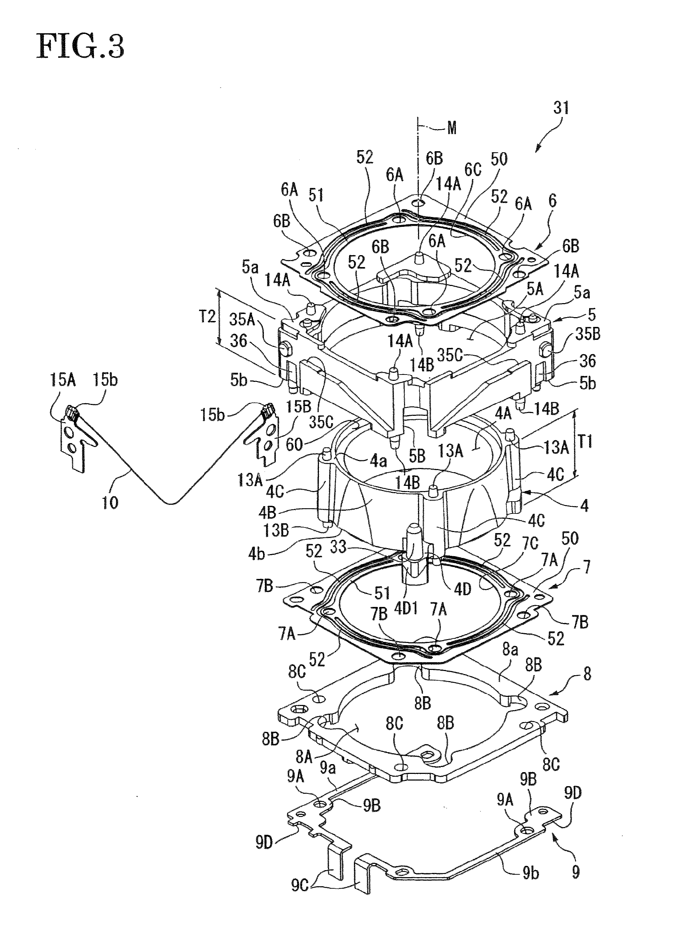

The drive unit 31 mainly comprises a lens frame 4, a module frame (a supporting member) 5, an upper leaf spring 6 and a lower leaf spring 7 (a pair of leaf spring members), a module lower panel (a base plate) 8, a power feeding member 9 and a shape memory alloy (abbreviated to as an SMA, hereinafter) wire 10, as shown in Figs. 3 to 6. These components are laminated into one body to form an actuator.

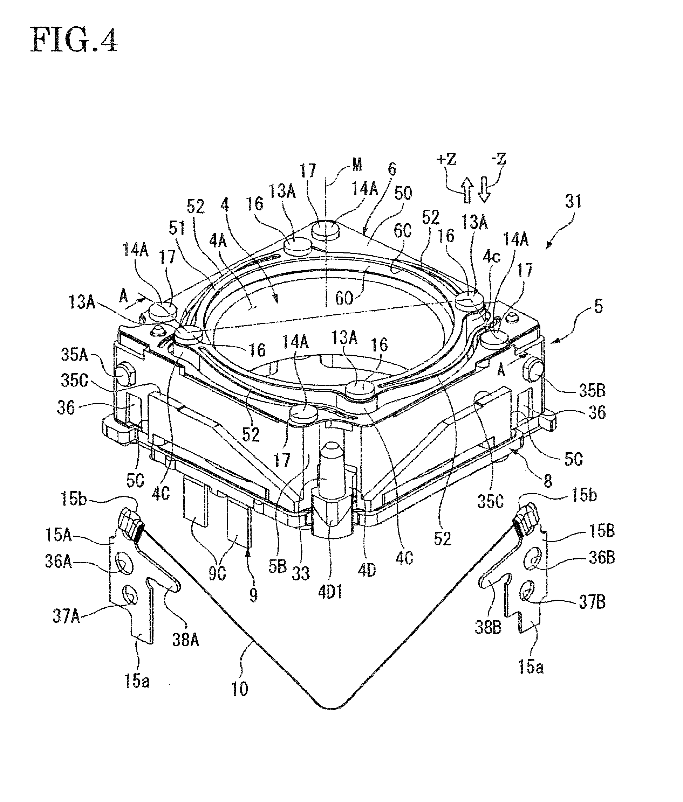

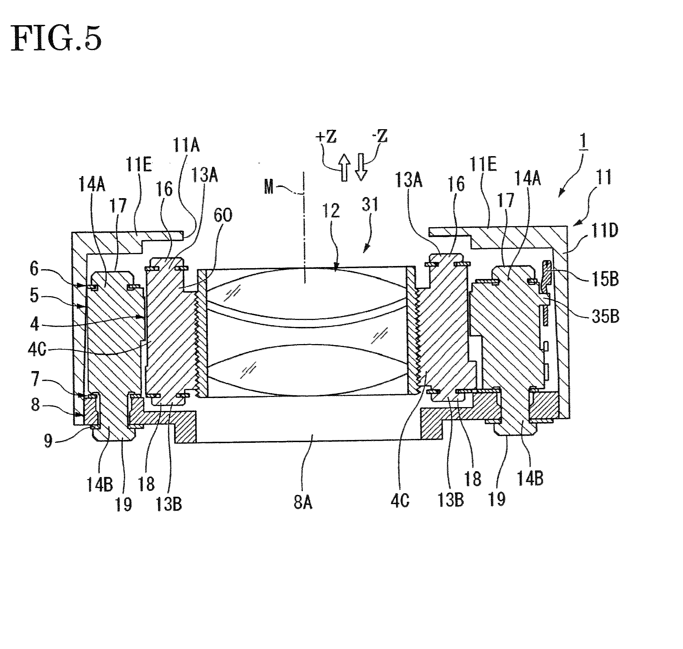

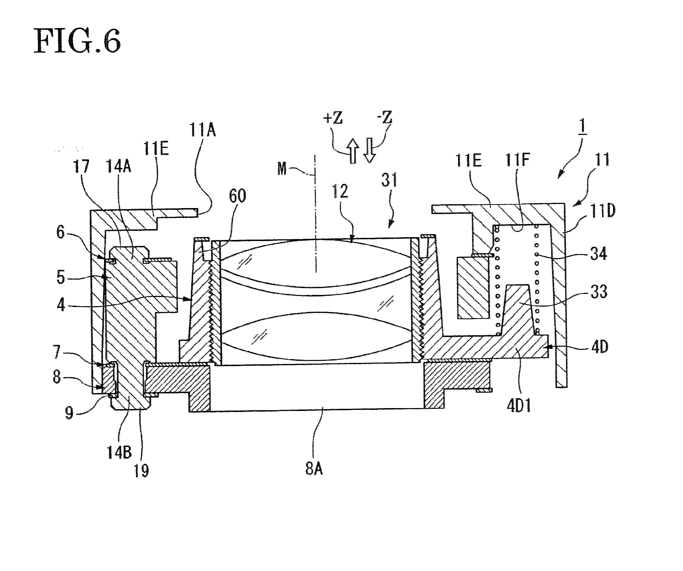

Fig. 3 is an exploded perspective view of a schematic structure of the drive unit 31. Fig. 4 is a perspective view of an external appearance of the drive unit 31. Fig. 5 is a sectional view of the drive unit 31 along a line A-A in Fig. 4. Fig. 6 is a sectional view of the drive unit 31 along a line B-B in Fig. 2. Some of component members are properly omitted from drawing in some drawings for the purpose of easy sight.

The lens frame 4 is inserted in the module frame 5 in assembly, as shown in Figs. 3 to 6. The upper leaf spring 6 and the lower leaf spring 7 are provided vertically above and below so as to hold the lens frame 4 and the module frame 5 therebetween in a direction of an axial line M. The upper leaf spring 6 and the lower leaf spring 7 are fixed to the lens frame 4 and the module frame 5 by caulking. The module lower panel 8 and the power feeding member 9 are laminated in this order on a lower side of the lower leaf spring 7 to be fixed together by caulking from a lower side of the module frame 5. The cover 11 covering the laminated body from the upper side is fixed to the module lower panel 8.

A reference sign M in the drawings denotes an axial line of the drive module 1, accorded with an optical axis of the lens unit 12, and shows a direction of a drive of the lens frame 4. That is to say, the direction of the axial line M means the direction of the optical axis.

In the following description of respective dismantled components, a location, a direction and such are mentioned on the basis of a positional relation with the axial line M in assembly in some cases for the purpose of easy description. In some cases, a direction along or parallel to the axial line M is simply referred to as an axial line direction while a diametrical direction or a circumferential direction of a circle whose center is the axial line M are simply referred to as a diametrical direction or a circumferential direction even in the case that a component includes no precise circle or cylindrical surface, and the specification should be construed accordingly unless the context requires otherwise. Further, the vertical direction means an up-and-down direction in the arrangement that the axial line M is provided in the vertical direction and a mounting surface of the drive module 1 is located vertically downward unless described otherwise.

Now, described in detail will be the respective components.

The lens frame 4 in the embodiment is formed into one body from a thermoplastic resin capable of thermal caulking or ultrasonic caulking such as polycarbonate (PC), liquid crystal polymer (LCP) resin and such, for example. The lens frame 4 is formed into a cylindrical shape as a whole as shown in Fig. 3. A cylindrical storage portion 4A is formed at the center of the lens frame 4 so as to pass through the lens frame 4 along the axial line M.

In an inner circumferential surface of the storage portion 4A, formed is a female screw (refer to Fig. 5). The lens unit 12, which includes a proper lens or lens group held in a lens barrel provided with a male screw in its outer circumference, is screwed and fixed into the storage portion 4A.

On an outer wall surface 4B of the lens frame 4, provided so as to extend in the direction of the axial line M are projecting portions 4C, projecting radially outward at intervals of substantially 90 degrees in the circumferential direction. Four upper fixing pins 13A and four lower fixing pins 13B, which respectively project upward and downward in the axial line direction M, are provided in upper end surfaces 4a and lower end surfaces 4b of the lens frame 4 at upper end portions and lower end portions of the respective projecting portions 4C.

The upper fixing pin 13A is for holding the upper leaf spring 6. The lower fixing pin 13B is for holding the lower leaf spring 7. The upper end surface 4a and the lower end surface 4b of the lens frame 4 are flat surfaces crossing at right angles with the axial line M.

The upper fixing pin 13A and the lower fixing pin 13B may be different in position in plane view. They, however, are coaxially provided in parallel to the axial line M in the embodiment. Accordingly, the upper fixing pin 13A and the lower fixing pin 13B are inserted into the upper leaf spring 6 and the lower leaf spring 7 in common positions, respectively.

Moreover, the upper fixing pin 13A and the lower fixing pin 13B may have different centers in the radial direction. The centers, however, are provided in the same circumference in the embodiment. Accordingly, the respective centers are arranged in the tetragonal lattice shape.

The lens frame 4 is further provided in its outer wall surface 4B with a guide projection (a locking portion) 4D so that the guide projection 4D projects outward in the radial direction from a lower end side of one of the projecting portions 4C. The guide projection 4D is for locking with an SMA wire 10 at a distal end key portion 4D1 thereof to lift the guide projection 4D upward (in a direction shown by an arrow "+Z") and move the guide projection 4D by contraction of the SMA wire 10, as shown in Fig. 4.

In the guide projection 4D, formed is a pillar-shaped spring holding part 33 provided projectingly upward in parallel to the axial line M. A coil-shaped bias spring (a bias spring member) 34 is provided to cover the spring holding part 33. The spring holding part 33 holds the bias spring 34, which is compressed between the lens frame 4 and the cover 11, as shown in Fig. 6.

The bias spring 34 plays a role of urging the lens frame 4 toward the module lower panel 8 through the guide projection 4D to make the lens frame 4 contact with the module lower panel 8 through the lower leaf spring 7. This allows the lens frame 4 to be pushed from the upper side so that movement of the lens frame 4 would be restrained even in the case that the SMA wire 10 is contracted due to an influence of an ambient environmental temperature to try to raise the lens frame 4.

The spring holding part 33 is formed on an upper surface of the guide projection 4D so as to be in line with the distal end key portion 4D1 in parallel to the axial line M. A locking position of the SMA wire 10 is designed to be in line with an urging position of the bias spring 34 in parallel to the axial line M. Moreover, the height of the spring holding part 33 is set at one-third or more of the natural length of the bias spring 34. The bias spring 34 can be held without falling down even under the condition that the bias spring 34 only covers the spring holding part 33 in assembly.

The module frame 5 is formed into the shape of a substantially rectangle as a whole of the outer shape in plane view, as shown in Fig. 3. The module frame 5 is also a cylindrical member having a storage portion 5A at the center thereof, the storage portion 5A being formed from a through hole coaxial with the axial line M. The lens frame 4 is accommodated in the storage portion 5A.

At respectively four upper and lower corners of the module frame 5, formed are upper end surfaces 5a and lower end surfaces 5b, which are formed from flat surfaces crossing at right angles with the axial line M. On the upper end surfaces 5a, four upper fixing pins 14A are formed upward while four lower fixing pins 14B are formed downward on the lower end surfaces 5b. The upper fixing pins 14A are for holding the upper leaf spring 6. The lower fixing pins 14B are for holding the lower leaf spring 7, the module lower panel 8 and the power feeding member 9, respectively.

The upper fixing pins 14A may be different in position from the arrangement of the lower fixing pins 14B in plane view. They are, however, coaxially provided in parallel to the axial line M, respectively, in the embodiment. Accordingly, the upper fixing pins 14A and the lower fixing pins 14B are inserted into the upper leaf spring 6 and the lower leaf spring 7 in common positions, respectively.

At a lower part of a corner of the module frame 5, formed is a notch 5B having a groove whose width in plane view is fitted to the guide projection 4D of the lens frame 4 so as to be movable in the direction of the axial line M. The guide projection 4D of the lens frame 4 passes through the notch 5B and the distal end key portion 4D1 of the guide projection 4D is projected outside in the radial direction of the module frame 5 when the lens frame 4 is inserted and accommodated in the module frame 5 from the lower side. The notch 5B is for positioning of the lens frame 4 in the circumferential direction.

At two corners adjacent to the notch 5B of the module frame 5, formed on side surfaces in directions toward the corner of the notch 5B is a pair of locking grooves 5C for mounting wire holding members 15A and 15B (refer to Figs. 3 and 4) for holding the SMA wire 10.

The wire holding members 15A and 15B are mounted by inserting pins 35A and 35B thereinto, the pins 35A and 35B being formed on side surfaces of the module frame 5. Grooves 36 filled with adhesive for fixing the module frame 5 and the wire holding members 15A and 15B are formed under the pins 35A and 35B on the side surfaces of the module frame 5. Moreover, formed are wall portions 35C capable of restraining rotation of the wire holding members 15A and 15B in fixing the wire holding members 15A and 15B to the module frame 5. The wall portions 35C are extended to a lateral side from the side surface (in the vertical direction to the side surface) of the module frame 5.

The module frame 5 is formed into one body from a thermoplastic resin capable of thermal caulking or ultrasonic caulking such as polycarbonate (PC), liquid crystal polymer (LCP) resin and such, for example, in the embodiment similarly to the lens frame 4.

The wire holding member 15A is mounted to a side surface on a side of which a pair of terminal portions 9C of the power feeding member 9 is projected from the drive module 1. The wire holding member 15B is mounted to a side surface on a side of which the pair of terminal portions 9C of the power feeding member 9 is not projected from the drive module 1.

Furthermore, the wire holding members 15A and 15B are conductive members such as metallic panels, which are formed into the shape of a key by caulking an end portion of the SMAwire 10 on a wire holding portion 15b.

The wire holding members 15A and 15B are respectively provided with through holes 36A and 36B. The pins 35A and 35B of the module frame 5 are fitted into the through holes 36A and 36B. Under the through holes 36A and 36B in the direction of the axial line M, respectively formed are through holes 37A and 37B through which adhesive is poured.

Arms 38A and 38B are formed for coming into contact with the wall portion 35C of the module frame 5 to restrain rotation of the wire holding members 15A and 15B in fixing the module frame 5 and the wire holding members 15A and 15B. Fitting the wire holding members 15A and 15B to the locking grooves 5C and the pins 35A and 35B from the lateral side to make the arms 38A and 38B come into contact with the wall portions 35C causes an end of the SMA wire 10 to be positioned and held.

Moreover, the wire holding members 15A and 15B are provided with the wire holding portion 15b (a location of caulking) for holding the SMA wire 10 and a plate-shaped terminal portion 15a located on a side opposite to the holding portion 15b. The terminal portion 15a is arranged to project slightly downward from the module lower panel 8 laminated in a lower part of the module frame 5 when the wire holding members 15A and 15B are mounted to the module frame 5.

A midsection of the SMA wire 10 whose both end portions are held on the pair of wire holding members 15A and 15B is locked from the lower side in the distal end key portion 4D1 of the guide projection 4D of the lens frame 4, which projects from the notch 5B of the module frame 5. That is to say, the SMA wire 10 is fixed to the module frame 5 so that the two end portions of the SMA wire 10 face each other across the axial line M through the wire holding members 15A and 15B under a condition that the midsection of the SMA wire 10 is locked in the distal end key portion 4D1 of the guide projection 4D.

Tension of the SMA wire 10 urges the lens frame 4 upward through the distal end key portion 4D1.

The upper leaf spring 6 and the lower leaf spring 7 are respectively piled on the upper and lower portions of the module frame 5 and the lens frame 4 inserted into the module frame 5, as shown in Figs. 3 and 4. The upper leaf spring 6 and the lower leaf spring 7 are panel-shaped leaf spring members punched into substantially the same shape in plane view and formed from a metallic panel such as a stainless (SUS) steel plate, for example, in the embodiment.

An external shape of the upper leaf spring 6 (the lower leaf spring 7) in plane view is a substantial rectangle similar to the upper end portion art (the lower end portion) of the module frame 5. At the center, formed is a circular opening 6C (7C) coaxial with the axial line M and slightly larger than the storage portion 4A of the lens frame 4. The upper leaf spring 6 (the lower leaf spring 7) is formed into the shape of a ring as a whole.

The upper leaf spring 6 (the lower leaf spring 7) mainly comprises a frame-shaped frame body 50 coupled to the upper end surface 5a (the lower end surface 5b) of the module frame 5, a ring portion 51 provided inside the frame body 50 and coupled to the upper end surface 4a (the lower end surface 4b) of the lens frame 4, and a spring portion 52 whose both ends are connected respectively to the frame body 50 and the ring portion 51 to couple the frame body 50 and the ring portion 51.

In the vicinity of corners of the frame body 50, correspondingly to positions of the upper fixing pins 14A (the lower fixing pins 14B) formed in the vicinity of the corners of the module frame 5, formed are four through holes 6B (7B) into which the respective upper fixing pins 14A (the lower fixing pins 14B) can be inserted. This allows positioning to the module frame 5 in the plane crossing at right angles with the axial line M to be achieved.

Similarly, correspondingly to positions of the upper fixing pins 13A (the lower fixing pins 13B) formed in the lens frame 4, formed in the ring portion 51 are four through holes 6A (7A) into which the respective upper fixing pins 13A (the lower fixing pins 13B) can be inserted.

A spring portion 52 is formed into the shape of a substantially quadrant arc shape and provided between the ring portion 51 and the frame body 50. One end of the spring portion 52 is connected to the ring portion 51 in the vicinity of the four through holes 6A (7A). The other end is connected to the frame body 50 in the vicinity of the four through holes 6A (7A).

The lens frame 4 is provided with a pre-pressure portion in the embodiment. The upper leaf spring 6 is deformed initially to generate urging force for urging the lens frame 4 toward the module lower panel 8, as shown in Figs. 4 to 6. This allows a balance with the bias spring 34 to be kept in the case that no electricity is transmitted to the SMA wire 10, so that the lens frame 4 can come into contact with the module lower panel 8 through the lower leaf spring 7.

The pre-pressure portion is, concretely, an annular raising portion 60 formed into one body with the lens frame 4. A thickness T1 of the whole of the lens frame 4 (refer to Fig. 3) is made larger than a thickness T2 of the module frame 5 (refer to Fig. 3) so that the lens frame 4 would project from the module frame 5 toward the upper leaf spring 6 in the case of no electricity transmitted to the SMA wire 10.

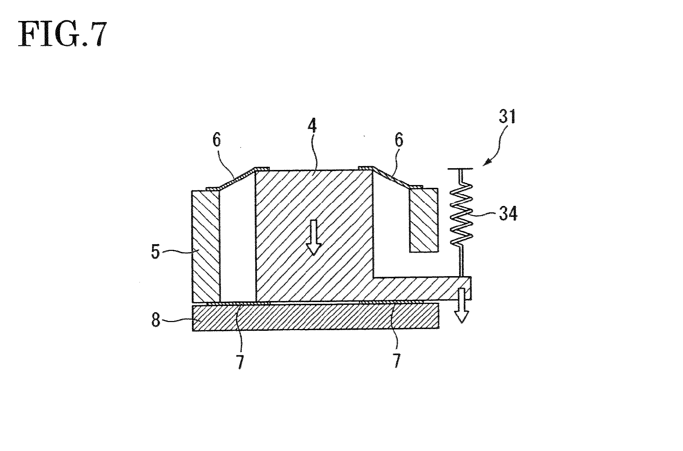

This causes the ring portion 51 of the upper leaf spring 6 to be initially positioned on an upper side of the frame body 50, so that the four spring portions 52 connecting the ring portion 51 and the frame body 50 are deformed obliquely so as to be raised upward. Accordingly, the upper leaf spring 6 is arranged to urge the lens frame 4 toward the module lower panel 8 initially as shown in Fig. 7. Fig. 7 is a simplified sectional view of the drive unit 31.

The respective lower fixing pins 14B of the module frame 5 are made to pass through the through holes 7B of the lower leaf spring 7 while the respective lower fixing pins 13B of the lens frame 4 accommodated in the module frame 5 are made to pass through the through holes 7A of the lower leaf spring 7, as shown in Fig. 3 to 6. The module lower panel 8 is piled on the lower leaf spring 7 from the lower side so as to hold the lower leaf spring 7 between the module frame 5 and the module lower panel 8 under the above condition. The rectangular frame body 50 of the lower leaf spring 7 is thus fixed to the lower end surface 5b of the module frame 5 with pressure.

The module lower panel 8 is a plate-shaped member having a rectangular external shape substantially similar to the external shape of the module frame 5. An opening 8A, which is in the shape of a substantial circle about the axial line M, is formed at the center part so as to pass through the module lower panel 8 in the thickness direction thereof. On a side of an upper surface 8a, which is piled on the lower leaf spring 7 in assembly, formed in positions corresponding to the respective lower fixing pins 13B of the lens frame 4 are four U-shaped depressions 8B for preventing interference with a later-mentioned caulking portion 18.

Furthermore, at respective corners on the periphery of the module lower panel 8, formed are through holes 8C through which the respective lower fixing pins 14B of the module frame 5 pass so as to correspond to the position where the lower fixing pins 14B are provided.

As a material for the module lower panel 8, used is synthetic resin having electrical insulating properties and light-shielding properties, for example. The module lower panel 8 having electrical insulating properties plays a role of an insulating member for fixing the power feeding member 9 to the lower leaf spring 7 under a condition of electrical insulating properties.

The power feeding member 9 comprises a pair of electrodes 9a and 9b respectively formed from board-shaped metallic panels. Each of the electrodes 9a and 9b is formed from the metallic panel comprising a substantially L-shaped wiring portion 9B extending along the external shape of the module lower panel 8 and a terminal portion 9C projecting outside the external shape of the module lower panel 8 from an end of the wiring portion 9B, the metallic panel being in the shape of a bent line.

Each of the wiring portions 9B is provided with two through holes 9A through which the two lower fixing pins 14B of the module frame 5, the two lower fixing pins 14B projecting downward from the lower surface of the module lower panel 8 and being adjacent to each other along the external shape of the module lower panel 8, are inserted so as to perform positioning of the electrodes 9a and 9b with respect to the module frame 5.

The terminal portions 9C of the electrodes 9a and 9b are provided so as to project downward in parallel to the direction of the axial line M from a side surface on the side where the wire holding member 15A is mounted in the module frame 5, as shown in Fig. 4. Accordingly, on a side surface of the wiring portion 9B between the through hole 9A and the terminal portion 9C in the electrode 9a, provided is a conductive connecting portion 9D notched into the shape of a depression for electrically connecting the terminal portion 15a of the wire holding member 15A.

In the electrode 9b, the notched conductive connecting portion 9D is formed in a place of connection with the terminal portion 15a of the wire holding member 15B on a side surface of the wiring portion 9B. The electrode 9b is electrically connected with the wire holding member 15B in the conductive connecting portion 9D.

For electrically connecting the respective conductive connecting portion 9D with the terminal portions 15a, adopted can be soldering or adhesion by means of conductive adhesive, for example.

The cover 11 is a member in which a side wall portion 11 D for covering the module frame 5 so as to be able to put the module frame 5 therein is extended downward from an outer periphery of an upper surface 11E and a rectangular opening 11 C is formed on a bottom side, as shown in Fig. 2. At the center of the upper surface 11E, provided is an opening 11A in the shape of a circle about the axial line M. The opening 11A is arranged to be of the size that the lens unit 12 can be put in and out, for example.

At a corner on a back side of the upper surface 11E of the cover 11, formed correspondingly to the spring holding portion 33 of the lens frame 4 is a concave portion 11 F for holding an upper end portion of the bias spring 34, as shown in Fig. 6. This allows positioning of the bias spring 34 to be performed between the cover 11 and the lens frame 4 in a circumferential direction about the axial line M.

Now, described hereinafter will be a method of assembling the drive module 1 having the above-mentioned structure. The assembly is carried out through mainly six processes from the first to the sixth processes in the embodiment.

In the first process, the lens frame 4 is inserted into the storage portion 5A of the module frame 5 from the lower side to arrange the respective upper end surfaces 5a of the module frame 5 and the respective upper end surfaces 4a of the lens frame 4 at the same height. Each of the upper fixing pins 14A of the module frame 5 and each of the upper fixing pins 13A of the lens frame 4 are then inserted into each of the through holes 6B and 6A of the upper leaf spring 6, respectively.

Following this, top end parts of the respective upper fixing pins 13A and 14A having passed through the respective through holes 6A and 6B of the upper leaf spring 6 and projecting upward, are thermally caulked by means of a heater chip not shown. This causes a caulking portion 16, which is a first fixing portion, and a caulking portion 17, which is a second fixing portion, to be formed respectively (refer to Figs. 4 and 5).

The upper end surface 4a of the lens frame 4 and the upper end surface 5a of the module frame 5 are aligned in the same plane in the above case. This allows the upper leaf spring 6, which is in the shape of a flat panel, to be provided without deformation to perform thermal caulking. Accordingly, it is not required to hold the deformed upper leaf spring 6, so that caulking can be easily carried out. Moreover, a rise and such due to deformation of the upper leaf spring 6 can be prevented from occurring. Further, dispersion in precision of caulking can be reduced even when the caulking portions 16 and 17 are simultaneously formed since the height of the respective heater chips can be made same.

The first process is completed at this point in time.

The second process is then performed.

The respective lower fixing pins 13B of the lens frame 4 are respectively inserted into the through holes 7A of the lower leaf spring 7. The respective lower fixing pins 14B of the module frame 5 are inserted into the through holes 7B of the lower leaf spring 7, the through holes 8C of the module lower panel 8 and the through holes 9A of the power feeding member 9, respectively, at the same time as the above. After the above, the top end portion of each of the lower fixing pins 13B passing through each of the through holes 7A of the lower leaf spring 7 and projecting downward is thermally caulked by means of a heater chip to form a caulking portion 18, which is a first fixing portion (refer to Fig. 5).

In carrying out the second process, the lens frame 4 is pushed upward with respect to the module frame 5 so that the upper end surface 4a of the lens frame 4 would project upward from the upper end surface 5a of the module frame 5. This allows the lower end surface 4b of the lens frame 4 and the lower end surface 5b of the module frame 5 to be aligned in the same plane. Accordingly, the module lower panel 8 can be laminated without deforming the flat-shaped lower leaf spring 7 to perform thermal caulking. The rise and such due to deformation of the lower leaf spring 7 can be thus prevented from occurring. Moreover, the same height of the respective heater chip allows the dispersion in precision of caulking to be reduced even in the case of simultaneously forming the caulking portion 18.

The second process is completed at the above point in time.

The third process is then carried out.

The lower end portions of the respective lower fixing pins 14B passing through the through holes 7B, 8C and 9A, respectively, and projecting downward are first thermally caulked by means of the heater chips to form a caulking portion 19 (refer to Figs. 5 and 6), which is the second fixing portion. The height of the respective heater chips can be made same at that time. Therefore, dispersion in precision of caulking can be reduced even in the case of simultaneously forming the caulking portion 19. Further, the caulking portion 18 formed in the second process is not in contact with the module lower panel 8 since the depressions 8B are formed in the module lower panel 8.

The third process is completed at the above point in time. Performing the first to third processes allows the upper leaf spring 6, the lower leaf spring 7, the module lower panel 8 and the power feeding member 9 to be laminated and fixed at the both ends of the lens frame 4 and the module frame 5.

The upper fixing pins 13A and the lower fixing pins 13B as well as the upper fixing pins 14A and the lower fixing pins 14B are provided coaxially. Accordingly, the heater chips for forming the caulking portions 16 and 18 and the caulking portions 17 and 19 are respectively same in position in the plane in caulking in the first to third processes. This allows the caulking operation to be efficiently carried out since no change in position of the heater chips is required in caulking in the processes.

Next, carried out is the fourth process (a providing process).

A pair of the wire holding members 15A and 15B to which the SMA wire 10 is mounted is first fixed to the module frame 5. Concretely, the pins 35A and 35B formed in two places in the module frame 5 are fitted into the through holes 36A and 36B of the wire holding members 15A and 15B while the wire holding members 15A and 15B are respectively locked in the locking grooves 5C. At that time, the midsection of the SMA wire 10 is locked in the distal end key portion 4D1 of the guide projection 4D and bridged so as to hold the distal end key portion 4D1 from the lower side. The respective terminal portions 15a of the wire holding members 15A and 15B project downward from the module lower panel 8 to be locked in or provided adjacently to the conductive connecting portion 9D of the electrodes 9a and 9b of the power feeding member 9 fixed to the module lower panel 8.

The fourth process is completed at the above point in time.

The fifth process (a fixing process) is then carried out.

First, thermosetting adhesive is poured into the through holes 37A and 37B to fill in the grooves 36 of the module frame 5 with the thermosetting adhesive. After the grooves 36 are filled with the thermosetting adhesive, the grooves 36 are put on a heating furnace for hardening the adhesive. Heating for 20 to 30 minutes at 100°C, for example, in the heating furnace causes the adhesive to be hardened, and thereby, the module frame 5 and the wire holding members 15A and 15B are adhered and fixed. The respective terminal portions 15a are then electrically connected with the conductive connecting portions 9D by soldering or by means of conductive adhesive or the like, for example, after the module frame 5 and the wire holding members 15A and 15B are adhered and fixed.

The fifth process is completed at this point in time.

Finally, the sixth process is carried out.

The spring holding part 33 of the lens frame 4 is inserted in the bias spring 34. Under such a condition, the cover 11 covers the module frame 5 from the upper side to connect the side wall portion 11 D and the module lower panel 8. As a method of the above, a locking claw or the like is provided in the side wall portion 11D to fit the module lower panel 8 in for the purpose of the connection or the side wall portion 11D is adhered or welded to the module lower panel 8 for connection, for example. The caulking portions 16 and 17 are respectively separated from a back surface of the upper surface 11 E of the cover 11.

Covering by means of the cover 11 causes the bias spring 34 to be compressed between the cover 11 and the guide projection 4D, so that the lens frame 4 is urged toward the module lower panel 8 through the guide projection 4D.

Assembly of a main body of the drive module is completed as described above.

The drive module is then mounted to the substrate after the adaptor 30 is mounted under the drive unit 31. For mounting the drive module, used can be a way of fixing such as adhesion and fitting. The substrate may be formed from an independent member attached to the drive module 1 or a member connected to or provided in an electronic device.

Furthermore, the lens unit 12 is screwed to the lens frame 4 through the opening 11A of the cover 11. The lens unit 12 is mounted finally in order to prevent lenses of the lens unit 12 from being contaminated or prevent dust and the like from being adhered during the assembling operation. The process may be carried out at an earlier stage (before the sixth process) in the case that the drive module 1 is shipped as a product with the lens unit 12 mounted and the case that the opening 11A of the cover 11 is made smaller than the external shape of the lens unit 12, that is, the opening 11A is also used as an aperture diaphragm, for example.

Now, described will be an operation of the drive module 1.

The bias spring 34 urges the lens frame 4 toward the module lower panel 8 through the guide projection 4D, and thereby, the lens frame 4 is made in contact with the module lower panel 8 through the lower leaf spring 7, as shown in Fig. 6, when no electricity is transmitted to the SMA wire 10 since the terminal portion 9C is supplied with no electric power.

This allows a rise of the lens frame 4 to be restrained by pushing the lens frame 4 from the upper side even in the case that the SMA wire 10 is contracted due to an ambient environmental temperature. Moreover, the lens frame 4 can be positioned at a standard driving position.

The SMA wire 10 contracts to the length corresponding to the temperature thereof when electricity is turned on to cause the SMA wire 10 to generate heat. In concrete description, electricity is transmitted to the SMA wire 10 when the power feeding member 9 is supplied with electric power through the terminal portion 9C since electricity is transmitted to the electrode 9a, the wire holding member 15A, the SMA wire 10, the wire holding member 15B and the electrode 9b, respectively. This causes Joule heat to be generated in the SMA wire 10, so that the SMA wire 10 rises in temperature. In the case that the temperature exceeds a temperature of starting transformation of the SMA wire 10, the SMA wire 10 contracts to the length corresponding to the temperature.

The SMA wire 10 is then enabled to give generation force (driving force) to the guide projection 4D due to contraction since the middle of the SMA wire 10 is locked in the guide projection 4D while both end portions of the SMA wire 10 are fixed to the module frame 5 through the wire holding members 15A and 15B. Accordingly, the guide projection 4D can be moved upward along the direction of the axial line M (in a direction of the arrow "+Z" in Figs. 4 to 6). This allows the lens frame 4 to be moved relatively to the module frame 5, and thereby, moved upward along the direction of the axial line M.

Further, movement of the lens frame 4 causes the upper leaf spring 6 and the lower leaf spring 7 to be deformed, so that elastic restoration force corresponding to the deformation operates on the lens frame 4. Concretely, the ring portion 51 coupled to the lens frame 4 moves in accordance with the movement of the lens frame 4. This causes the spring portion 52, coupling the frame body 50 coupled to the module frame 5 and the ring portion 51, to be deformed, so that elastic restoration force of the spring portion 52 operates on the lens frame 4. The lens frame 4 stops its movement at a place where the elastic restoration force of the upper leaf spring 6 and the lower leaf spring 7 is balanced with tension of the SMA wire 10.

Suspending supply of power to stop electricity from being transmitted to the SMA wire 10 enables the SMA wire 10 to be extended. This allows the lens frame 4 to be moved downward (in a direction of an arrow "-Z" in Figs. 4 to 6) contrary to the direction in the above description. As described above, controlling the quantity of the power supply, namely, controlling the quantity of heat generation of the SMA wire 10 allows the lens frame 4 to be moved in the two directions (upward and downward directions) along the direction of the axial line M, so that the lens frame 4 can be stopped at a desired position.

During the movement of the lens frame 4, the urging force of the bias spring 34 operates on the lens frame 4 through the guide projection 4D. The point of action of the urging force of the bias spring 34 is superimposed on the point of action of the generation force of the SMA wire 10 at the guide projection 4D. The two points of action are thus positioned in the same straight line parallel to the axial line. Therefore, the moment of force for the lens frame 4 is difficult to be generated and an inclination of the lens frame 4 is difficult to occur during the movement. This causes little influence to be given on the posture of the lens frame 4 in the movement even in the case that the force larger than the forces of the upper leaf spring 6 and the lower leaf spring 7 is operated on the lens frame 4 by the bias spring 34.

Moreover, the bias spring 34 urges the lens frame 4 toward the module lower panel 8 when no electricity is transmitted to the SMA wire 10, as described above. The occurrence of an inclination of the lens frame 4, however, can be restrained even in the case of transmission of no electricity.

That is to say, it is possible to initially deform the whole of the upper leaf spring 6 to certainly urge the lens frame 4 toward the module lower panel 8 since the lens frame 4 is thicker than the module frame 5 and the lens frame 4 projects from the module frame 5 toward the upper leaf spring 6 in the case that no electricity is transmitted to the SMA wire 10. This allows a balance with the bias spring 34 urging the guide projection 4D of the lens frame 4 to be kept. Accordingly, the lens frame 4 can be prevented from inclining to maintain a condition that the lens frame 4 is in contact with the module lower panel 8, as shown in Figs. 6 and 7.

Especially in the embodiment, such a simple structure that the lens frame 4 and the module frame 5 are only adjusted in balance of thickness allows an inclination of the lens frame 4 to be restrained in the case of no electricity turned on.

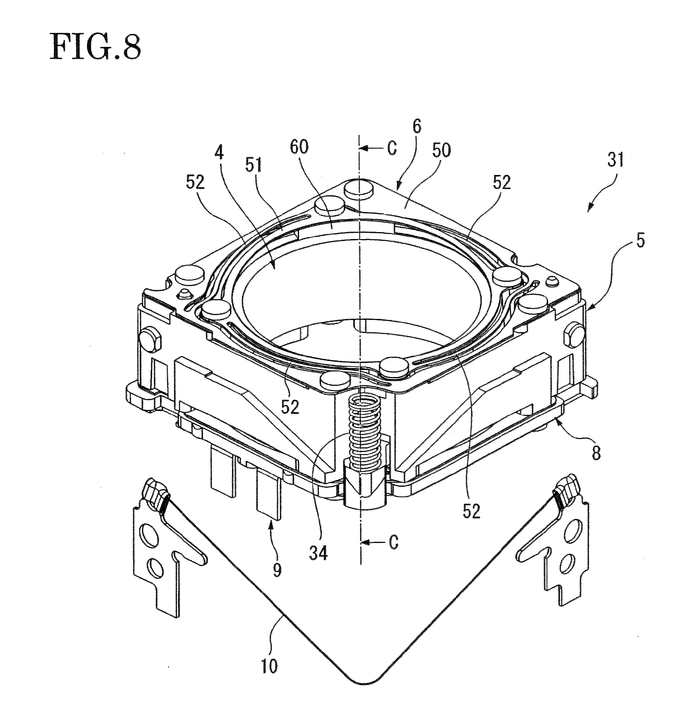

The lens frame 4 is arranged to be thicker than the module frame 5 in the embodiment. The raising portion 60, however, may be partially provided so as to be positioned oppositely (on the diagonal) to the bias spring 34 across the axial line M, as shown in Figs. 8 to 10.

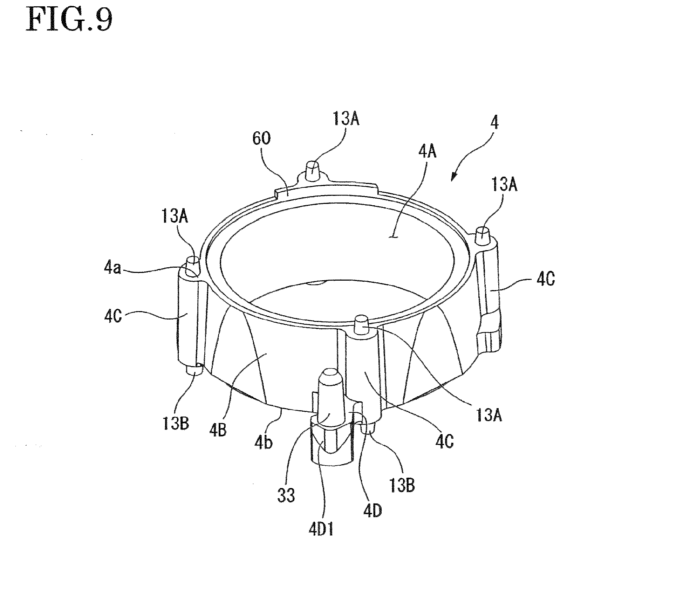

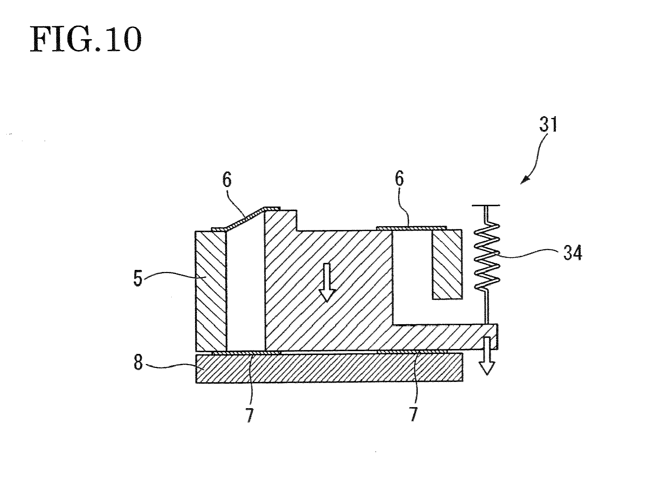

Fig. 8 is a perspective view of the drive unit 31, showing an external appearance thereof. Fig. 9 is a perspective view of the lens frame 4 shown in Fig. 8. Fig. 10 is a simplified sectional view of the drive unit 31 along a line C-C in Fig. 8.

In this case, also achieved can be a similar operational effect. That is to say, the upper leaf spring 6 is initially deformed to let the upper leaf spring 6 generate urging force for urging the lens frame 4 toward the module lower panel 8, a balance with the bias spring 34 urging the lens frame 4 is given, and thereby, an inclination of the lens frame 4 can be restrained when no electricity is transmitted to the SMA wire 10.

The raising portion 60 is provided on the diagonal of the point of action of the urging force of the bias spring 34 especially in the case, so that a balance with the urging force of the bias spring 34 can be kept efficiently. This allows initial deformation of the upper leaf spring 6 to be made small (the height of the raising portion 60 to be reduced), so that an inclination of the lens frame 4 can be effectively restrained even in the case that the urging force for urging the lens frame 4 toward the module lower panel 8 is small.

The raising portion 60 is provided all over or in a part of the lens frame 4 so that the upper leaf spring 6 would be initially deformed to generate urging force for urging the lens frame 4 toward the module lower panel 8, as described above. The invention, however, is not limited to the above.

A washer functioning as a pre-pressure portion may be provided between the frame body 50 of the upper leaf spring 6 and the fixing pin 13A formed in the upper end surface 4a of the lens frame 4, for example. The ring portion 51 of the upper leaf spring 6 can be provided in an upper portion by the thickness of the washer even in this case. This allows one, two, three or all four spring portions 52 to be initially deformed so as to be raised upward. Accordingly, the similar operational effect can be achieved. It is also possible to use a spacer, a block and the like as the pre-pressure portion other than the washer.

Furthermore, a spring constant of the upper leaf spring 6 may be designed to be larger than that of the lower leaf spring 7 in the embodiment.

This allows the urging force for urging the lens frame 4 toward the module lower panel 8 to be increased even in the case that the quantity of initial deformation of the upper leaf spring 6 is made as small as possible by means of the pre-pressure portion, so that an inclination of the lens frame 4 can be effectively restrained.

The upper leaf spring 6 can be made larger in thickness than the lower leaf spring 7 or the width of an arm of the spring portion 52 of the upper leaf spring 6 can be made larger than that of the spring portion 52 of the lower leaf spring 7, for example, in order to increase the spring constant of the upper leaf spring 6.

In the case that the width of the arm of the spring portion 52 of the upper leaf spring 6 is made larger than that of the spring portion 52 of the lower leaf spring 7, for example, it is possible to make the width of all the arms of the four spring portions 52 larger than the width of the arm of the spring portion 52 of the lower leaf spring 7. Moreover, the width of the arms of the two spring portions 52 positioned closely to a point, which is on the diagonal of the bias spring 34 across the axial line M, may be also formed larger.

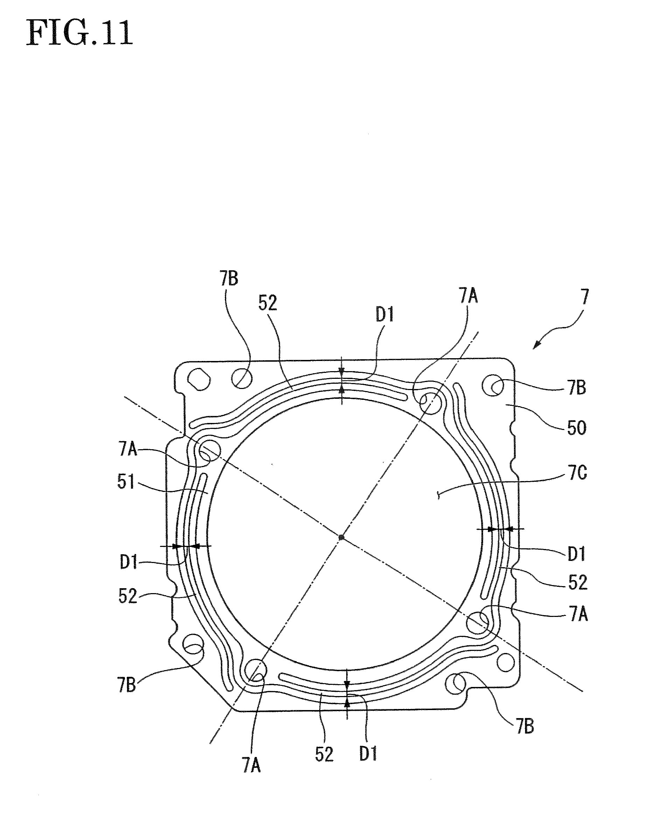

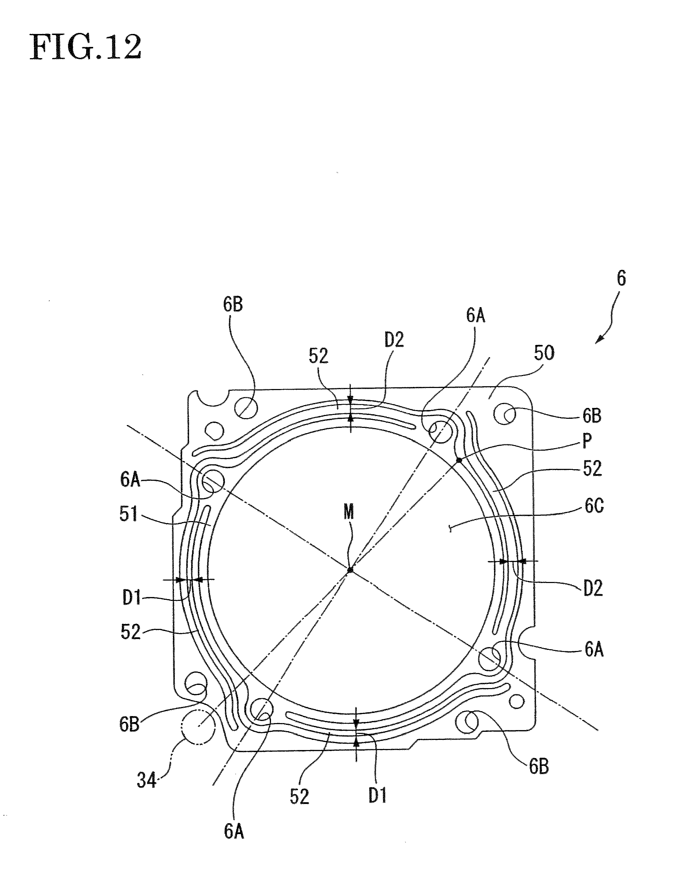

It is possible, for example, to form the width of the arms of the four spring portions 52 of the lower leaf spring 7 into D1 as shown in Fig. 11, form the width of the arms of two of the four spring portions 52 of the upper leaf spring 6 into D1 as shown in Fig. 12 and form the width of the arms of the other two spring portions 52 positioned closely to a point P, which is on the diagonal of the bias spring 34 across the axial line M, into D2 larger than D1. This allows an inclination of the lens frame 4 to be easily and more effectively restrained in the case of no electricity transmitted to the SMA wire 10.

Fig. 11 is a plan view of the lower leaf spring 7. Fig. 12 is a plan view of the upper leaf spring 6.

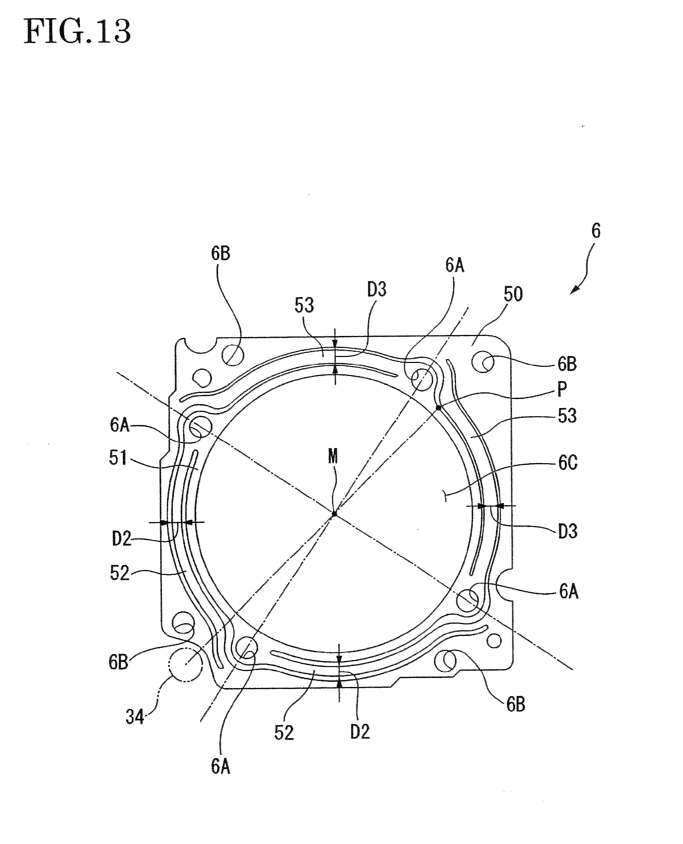

Further, it is also possible that the width of the arms of two of the four spring portions 52 of the upper leaf spring 6 is made D2 larger than D1 while the width of the arms of the other two spring portions 52 positioned closest to the point P, which is on the diagonal of the bias spring 34 across the axial line M, is made D3 further larger than D2, as shown in Fig. 13. This allows an inclination of the lens frame 4 to be easily and more effectively restrained in the case of no electricity transmitted to the SMA wire 10. Fig. 13 is a plan view of the upper leaf spring 6.

### (Electronic Device)

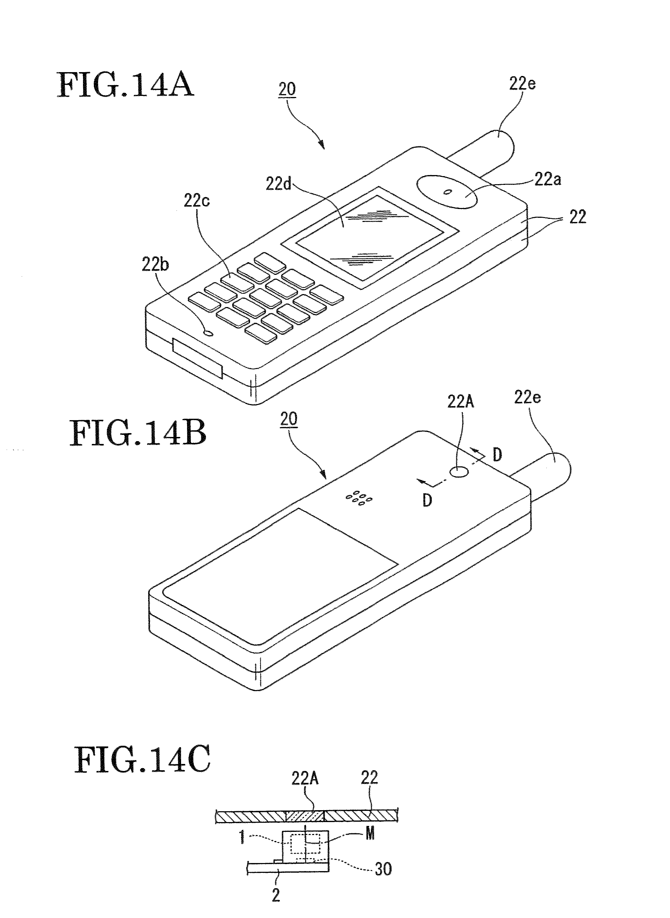

Now, described will be an embodiment of an electronic device in accordance with the invention, with reference to Fig. 14. A cellular phone provided with a camera, which comprises the drive module 1 in the former embodiment, will be exemplified in this embodiment as an example of the electronic device.

A cellular phone provided with the camera 20 in accordance with the embodiment comprises a telephone receiver 22a, a telephone transmitter 22b, an operating unit 22c, a liquid crystal display 22d, an antenna unit 22e and well-known electronic parts of a cellular phone such as a control circuit unit, which is not shown, outside or inside a cover 22, as shown in Fig. 14.

Fig. 14A is a perspective view of a front surface of the cellular phone provided with a camera 20, showing an external appearance thereof. Fig. 14B is a perspective view of a back surface of the cellular phone provided with a camera 20, showing an external appearance thereof. Fig. 14C is a sectional view along a line D-D in Fig. 14B.

A window 22A for transmitting external light is provided in the cover 22 on a back side of a surface provided with the liquid crystal display 22d, as shown in Fig. 14B. The opening 11A of the drive module 1 is faced to the window 22A of the cover 22 and the drive module 1 is provided so that the axial line M would extend along a direction of a normal of the widow 22A, as shown in Fig. 14C.

In the embodiment, the drive module 1 is mechanically and electrically connected to a substrate 2. The substrate 2 is connected to a control circuit not shown for supplying the drive module 1 with electric power.

Such a structure allows the light transmitted through the window 22A to be converged at a lens unit 12, which is not shown in Fig. 14, of the drive module 1 to form an image on an image pickup element 30. Supplying the drive module 1 with electric power properly from the control circuit enables the lens unit 12 to move in the direction of the axial line M, so that a focal position can be adjusted to take a photograph.

The cellular phone provided with a camera 20 in accordance with the embodiment, especially, includes the drive module 1 in which a rise of the lens frame 4, which is caused by the ambient environmental temperature, is restrained so as to restrain an inclination of the lens frame 4 in the case of no electricity transmitted to the SMA wire 10. Accordingly, the cellular phone provided with a camera 20 can be used as a fixed focus camera, for example, even in the case of transmission of no electricity. This can improve the worth as a product as well as achieving lowering of consumption power.

A technical range of the invention is not limited to the embodiments. A variety of modifications can be made within a range not deviated from the scope of the invention.

In the embodiment, for example, described is the case that the upper leaf spring 6 and the lower leaf spring 7 are formed from leaf spring members in the shape of a rectangle in plane view and have fulcrums of the springs at the four corners thereof. It is, however, also possible to use a leaf spring member having a structure that the spring portions 52 are formed at the four corners (the spring portions 52 are formed along the diagonal from the four corners) and the fulcrum of the spring is formed in the middle of a substantially rectangular straight line part. Moreover, used may be a leaf spring member having the three spring portions 52 every 120 degrees in a substantially circular opening.

That is to say, the number of the spring portion 52 and fulcrum of the spring is not limited and can be selected freely. Particularly, designing the spring portion 52 so that a resultant of the spring would be positioned on the diagonal of the bias spring 34 across the axial line M allows an inclination of the lens frame 4 to be effectively restrained in the case that no electricity is transmitted to the SMA wire 10. This is preferable.

Further, in the embodiment, described is an example that the upper fixing pins 13A and 14A and the lower fixing pins 13B and 14B are inserted into the upper leaf spring 6 and the lower leaf spring 7, which are leaf spring members for urging the lens frame 4, to thermally caulk the top end portions of the fixing pins. A way of fixing the leaf spring member, however, is not limited to the above. The leaf spring member may be fixed by ultrasonic caulking, for example. The leaf spring member may be adhered to the lens frame 4 or the module frame 5. In this case, achieved can be great strength in adhesion even using adhesive since a large adhesion area can be secured.

Moreover, the module frame 5 is described as a member having a substantially rectangular shape as a whole in the embodiment. The module frame 5, however, is not limited to the substantially rectangular shape. It may be in the shape of a polygonal shape.

Furthermore, a cellular phone provided with a camera 20 is exemplified as an electronic device using the drive module 1 in the embodiment. The sort of the electronic device, however, is not limited to the above. The drive module 1 may be used for an optical device such as a digital camera and a camera built in a personal computer, for example, or may be used in an electronic device such as an information reading and storing apparatus and a printer as an actuator for moving a driven member to a target place.

## Claims

1. A drive module (1) comprising:
a lens frame (4);
a supporting member (5) for storing the lens frame therein;
a pair of leaf spring members (6, 7) provided so as to hold the lens frame therebetween in an optical axis direction (M) for elastically holding the lens frame so that the lens frame is movable with respect to the supporting member along the optical axis direction;
a shape memory alloy wire (10) having both end portions held on the supporting member and a midsection locked on a locking portion (4D1) of the lens frame for driving the lens frame toward one leaf spring member (6) of the pair of leaf spring members against restoring force of the leaf spring members by contraction due to generation of heat in turning on electricity;
a base plate (8) fixed to the supporting member so as to hold the other leaf spring member (7) of the pair of leaf members between the base plate and the supporting member; and
a bias spring member (34) for urging the lens frame toward the base plate through the locking portion to make the lens frame come in contact with the base plate through the other leaf spring member,
wherein
the lens frame is provided with a pre-pressure portion (60) for generating urging force for initially deforming one leaf spring member to urge the lens frame toward the base plate and for holding a balance with the bias spring member in the case of no electricity transmitted to the shape memory alloy wire to keep the contact condition of the lens frame.

2. The drive module according to Claim 1, wherein
the pre-pressure portion makes the lens frame thicker than the supporting member so that the lens frame projects from the supporting member toward the one leaf spring member (6) during transmission of no electricity to the shape memory alloy wire.

3. The drive module according to Claim 2, wherein
the pre-pressure portion is provided so as to be on an opposite side of the bias spring member across an axial line of the lens frame.

4. The drive module according to any one of Claims 1 to 3, wherein
a spring constant of the one leaf spring member is larger than a spring constant of the other leaf spring member.

5. An electronic device (20) comprising the drive module according to any one of Claims 1 to 4.
